# EUROPÄISCHE PATENTSCHRIFT

(11) **EP 2 982 624 B1**
(45) Veröffentlichungstag und Bekanntmachung des Hinweises auf die Patenterteilung: **04.10.2017**
(21) Anmeldenummer: 14179675.5
(22) Anmeldetag: 04.08.2014
(51) Int. Cl.: B65G 57/30, B65G 59/10, B65G 1/04

(54) **Haltevorrichtung und Lagersystem für Behälterstapel**
Holding device and storage system for container stack
Dispositif de retenue et système de stockage pour empilement de récipients

(43) Veröffentlichungstag der Anmeldung: 10.02.2016
(73) Patentinhaber: Extor GmbH, 30559 Hannover (DE)
(72) Erfinder: SWOBODA, Martin, 30175 Hannover (DE)
(74) Vertreter: Glawe, Delfs, Moll

(56) Entgegenhaltungen:
- EP-A1- 0 267 118
- DE-A1- 19 849 391
- DE-U1-202006 002 326
- JP-A- S57 137 230

## Beschreibung

Die Erfindung betrifft eine Haltevorrichtung für einen Behälterstapel mit Einlagerung und Entnahme von unten sowie ein Lagersystem für Behälterstapel mit Einlagerung und Entnahme von unten.

Im Stand der Technik sind Lagersysteme für Behälterstapel mit Einlagerung und Entnahme von unten bekannt. Bei entsprechenden Lagersystemen werden aus mehreren, in vertikaler Richtung übereinandergestapelten Behältern gebildete Behälterstapel durch Haltevorrichtungen so in einem Abstand vom Boden gehalten, dass sich unterhalb der Behälterstapel eine Beschickungsvorrichtung, bspw. ein Transportfahrzeug, bewegen und einzelne Behälter in einem Behälterstapel einlagern oder aus einem Behälterstapel entnehmen kann.

Zur Einlagerung eines Behälters in einen Behälterstapel wird der Behälter in der Regel durch die Beschickungsvorrichtung von unten derart an den Behälterstapel herangefahren und hochgedrückt, dass der Behälterstapel - mit dem einzulagernden Behälter nunmehr als untersten Behälter - insgesamt vertikal nach oben verfahren wird, bis der einzulagernde bzw. unterste Behälter von der Haltevorrichtung gehalten wird. Die Beschickungsvorrichtung ist anschließend wieder frei.

Zur Entnahme eines Behälters wird die Beschickungsvorrichtung an den Behälterstapel, dessen unterster Behälter entnommen werden soll, herangefahren. Anschließend wird die Haltevorrichtung für einen gewissen Zeitraum gelöst und die Beschickungsvorrichtung senkt den gesamten Behälterstapel ab, bis der zweite Behälter von unten und damit auch die darüber liegenden Behälter durch die - zu diesem Zeitpunkt nicht mehr gelöste - Haltevorrichtung gehalten wird. Der zu entnehmende Behälter ist dann frei und kann dann durch die Beschickungsvorrichtung abtransportiert werden.

Soll ein anderer als der unterste Behälter eines Behälterstapels entnommen werden, so ist ein sukzessives Entnehmen und Umlagern der jeweils untersten Behälter des Behälterstapels in andere Behälterstapel erforderlich.

In Dokument DE 198 49 391 A1 ist ein entsprechendes Lagersystem für Behälterstapel mit Einlagerung und Entnahme von unten beschrieben, das den Oberbegriff des Anspruchs 1 offenbart. Die Haltevorrichtungen bei diesem Lagersystem sind als Fallklinken ausgestaltet. Um die Haltevorrichtungen für eine Einlagerung oder Entnahme eines Behälters kurzzeitig zu lösen, sind aufwendige mechanische Schalt- oder Stellmittel an der Beschickungsvorrichtung erforderlich, mit denen die Haltevorrichtungen gezielt für den für die Einlagerung oder Entnahme eines Behälters erforderlichen Zeitraum gelöst werden können. Bei diesem Stand der Technik ist nachteilig, dass entsprechende Schalt- oder Stellmittel aufwendig und kostenintensiv sind, sowohl in der Konstruktion als auch in der Wartung.

Der Erfindung liegt daher die Aufgabe zugrunde, gegenüber dem Stand der Technik verbesserte Haltevorrichtungen für einen Behälterstapel mit Einlagerung und Entnahme von unten sowie ein verbessertes Lagersystem für Behälterstapel mit Einlagerung und Entnahme von unten zu schaffen, bei denen die Nachteile aus dem Stand der Technik nicht mehr oder nur noch in vermindertem Umfang auftreten.

Gelöst wird diese Aufgabe durch eine Haltevorrichtung gemäß dem Hauptanspruch sowie ein Lagersystem gemäß Anspruch 8.

Demnach betrifft die Erfindung eine Haltevorrichtung für einen Behälterstapel mit Einlagerung und Entnahme von unten, mit einem Haltehaken umfassend einen Tragarm, der um eine Drehachse zwischen einer Halteposition zum Halten eines Behälterstapels und einer Entnahmeposition zur Entnahme eines Behälters des Behälterstapels verschwenkbar ist, und einem Auslösearm, der drehfest gegenüber dem Tragarm ist, wobei zwischen der Halteposition und der Entnahmeposition eine Labilgleichgewichtsposition vorgesehen ist und die Haltevorrichtung ein Rückstellelement umfasst, wobei das Rückstellelement bei einer Verschwenkung des Tragarms im Bereich zwischen der Halteposition und der Labilgleichgewichtsposition zum Drängen des Tragarms zur Halteposition hin und bei einer Verschwenkung des Tragarms im Bereich zwischen Labilgleichgewichtsposition und Entnahmeposition zum Drängen des Tragarms zur Entnahmeposition hin ausgebildet ist, und wobei der Auslösearm derart ausgebildet ist, dass er in der Entnahmeposition und der Labilgleichgewichtsposition des Tragarms eine Auslöseebene schneidet, die parallel zur Höhe des zu haltenden Behälterstapels, den Tragarm in Halteposition und Labilgleichgewichtsposition schneidend und den Auslösearm in der Halteposition des Tragarms nicht-schneidend ist.

Die Erfindung betrifft weiterhin ein Lagersystem für Behälterstapel mit Einlagerung und Entnahme von unten umfassend wenigstens einen vertikalen Schacht zur wenigstens teilweisen Aufnahme eines Behälterstapels mit einer unteren Öffnung zur Einlagerung und Entnahme von Behältern, wobei im Bereich der unteren Öffnung des wenigstens einen Schachts wenigstens eine Haltevorrichtung zum Halten eines Behälterstapels im Schacht vorgesehen ist und wenigstens eine der Haltevorrichtungen erfindungsgemäß ausgebildet ist.

Die erfindungsgemäße Haltevorrichtung zeichnet sich dadurch aus, dass sein zur Entnahme eines Behälters aus dem gehalten Behälterstapel erforderliches Verschwenken sowohl aus der Halteposition in die Entnahmeposition als auch zurück in die Halteposition allein durch eine Bewegung eines Auslösers parallel zur Höhe des Behälterstapels entlang der Auslöseebene erreicht werden kann. Dadurch ist es möglich, dass die Haltevorrichtung bereits durch einen Auslöser bewerkstelligt werden kann, welcher feststehend an einem Lagerbediengerät angeordnet ist, das zur Einlagerung und Entnahme eines Behälters aus dem Behälterstapel bereits parallel zur Höhe des Behälterstapels verfahren wird. Der Auslöser kann in diesem Fall bspw. ein Vorsprung oder ein feststehender Ausleger am Lagerbediengerät sein. Jedenfalls ist für den Auslöser grundsätzlich keine gesonderte Mechanik oder ein ansteuerbarer Aktuator erforderlich, wie dies im Stand der Technik der Fall ist. Entsprechend kann aufgrund der erfindungsgemäßen Haltevorrichtungen ein Lagerbediengerät im Vergleich zum Stand der Technik weniger aufwendig ausgestaltet sein, was sowohl bei der Konstruktion als auch bei der Wartung deutlichen Aufwand und somit Kosten spart.

Die erfindungsgemäße Haltevorrichtung kann durch die Beschreibung von Beispielen eines typischen Einlagerungs- und eines typischen Entnahmevorgangs verdeutlicht werden. Im Ausgangszustand wird ein Behälterstapel durch mehrere - bspw. vier im Rechteck angeordnete - erfindungsgemäße Haltevorrichtungen gehalten, sodass der unterste Behälter auf den Haltevorrichtungen aufliegt. Genauer liegt der unterste Behälter auf den Tragarmen der Haltehaken der Haltevorrichtungen, die sich in Halteposition befinden, auf.

Zur Einlagerung eines weiteren Behälters in den Behälterstapel wird der einzulagernde Behälter von einem Lagerbediengerät von unten an den untersten Behälter des Behälterstapels herangefahren und dann so angehoben, dass der einzulagernde Behälter nunmehr den untersten Behälter des Behälterstapels bildet und der gesamte Behälterstapel angehoben wird. Während des Anhebens des Behälterstapels werden die Tragarme der Haltehaken derart nach oben verschwenkt, dass sie seitlich an dem einzulagernden Behälter entlanggleiten. Dabei werden die Tragarme nur in eine Position zwischen Halteposition und Labilgleichgewichtsposition verschwenkt, so dass die Rückstellelemente die Tragarme zurück zur Halteposition hin drängen. Ist der Behälterstapel ausreichend weit angehoben, können die Tragarme unter den untersten Behälter greifen, wobei sie aufgrund der Rückstellelemente in die Halteposition verschwenkt werden. Wird das Lagerbediengerät nun wieder nach unten verfahren, senkt sich der Behälterstapel auf die Tragarme der Haltehaken ab und wird dann durch die Haltevorrichtungen gehalten. Der unterste Behälter des Behälterstapels ist dabei dann der zu Beginn des Einlagerungsvorganges einzulagernde Behälter.

Zur Entnahme des untersten Behälters eines Behälterstapels wird das Lagerbediengerät an den untersten Behälter des Behälterstapels herangefahren und der Behälterstapel wird angehoben, und zwar über die Höhe hinaus, die das Lagerbediengerät erreicht, um einen Behälter einzulagern. Am Lagerbediengerät sind feststehende Auslöser vorgesehen, die in die Auslöseebenen der einzelnen Haltevorrichtungen ragen. Bei den Auslösern kann es sich bspw. um Ausleger von der Behälteraufnahme, auf der der zu entnehmende Behälter nach der Entnahme aufliegen soll, handeln. Es ist auch möglich, dass die Behälteraufnahme entsprechend weit seitlich über den zu entnehmenden Behälter ragt.

Indem das Lagerbediengerät höher verfahren wird als bei der Einlagerung von Behältern, können die Auslöser mit den Tragarmen in Kontakt kommen und diese in den Bereich zwischen Labilgleichgewichtsposition und Entnahmeposition hinein verschwenken. Daraufhin werden die Rückstellelemente die Tragarme in die Entnahmeposition bewegen, womit die Auslösearme der Haltehaken in die Auslöseebene hineinragen. Gleichzeitig wird in der Entnahmeposition die Entnahme des untersten Behälters des Behälterstapels nach unten nicht durch die Tragarme behindert.

Beim anschließenden Absenken des Lagerbediengeräts kommen die Auslösearme mit den Auslösern in Kontakt und werden derart verschwenkt, dass die mit den Auslösearmen drehfest verbundenen Tragarme der Haltehaken in einen Bereich zwischen Labilgleichgewichtsposition und Halteposition verschwenkt werden, womit die Tragarme wieder zur Halteposition hin gedrängt werden. Bei weiterem Absenken des Lagerbediengerätes gleiten die Tragarme dann zunächst an den Seitenwänden des zu entnehmenden Behälters entlang, bevor sie zwischen dem zu entnehmenden Behälter und dem darüber liegenden Behälter eingreifen. Wird das Lagerbediengerät weiter abgesenkt, schwenken die Tragarme in die Halteposition, wobei der vormals über dem zu entnehmenden Behälter liegende Behälter direkt auf den Haltevorrichtungen aufliegt und somit nunmehr den untersten Behälter des Behälterstapels bildet. Der zu entnehmende Behälter liegt auf dem Lagerbediengerät auf und kann weiter transportiert werden.

Es ist zu beachten, dass es sich bei den beschriebenen Einlagerungs- und Entnahmevorgängen nur um beispielhafte Darstellungen handelt, in denen insbesondere auf eine besondere Ausgestaltung des Lagerbediengerätes Bezug genommen wird. Es ist jedoch selbstverständlich, dass andere Ausgestaltungen des Lagerbediengerätes und daraus resultierend abweichende Einlagerungs- und Entnahmevorgänge möglich sind. Auch ist bspw. möglich, dass zur Entnahme und zur Einlagerung unterschiedliche Lagerbediengeräte eingesetzt werden. Unabhängig davon ist festzuhalten, dass die erfindungsgemäßen Haltevorrichtungen allein durch eine Bewegung eines Auslösers entlang der Auslöseebene bedient werden können. Da die Auslöseebene parallel zur Höhe des Behälterstapels verläuft, lässt sich aber allein die regelmäßig vorgesehene Verfahrbarkeit des Lagerbediengerätes in genau diese Richtung nutzen, um die erfindungsgemäße Haltevorrichtung zu bedienen. Aufwendige Stell- oder Schaltelemente, wie sie aus dem Stand der Technik bekannt sind, sind - wie auch aus dem Beispiel unmittelbar ersichtlich - jedenfalls nicht erforderlich.

Es ist bevorzugt wenn das Rückstellelement eine Feder, vorzugsweise eine Zugfeder, mit zwei Federenden ist, wobei das eine Federende am Haltehaken der Haltevorrichtung, das andere Federende stationär befestigt ist. "Stationär" in diesem Zusammenhang bedeutet, dass das Federende gegenüber der Drehachse des Haltehakens ortsfest ist. Durch geeignete Wahl des Angriffspunktes der Feder an dem Haltehaken sowie des Punktes der stationären Befestigung kann die gewünschte Funktionsweise des Rückstellelementes ohne weiteres erreicht werden. Bei einem Haltehaken, welcher gegenüber seiner Drehachse austariert ist, kann die Feder bspw. derart angeordnet sein, dass sich die Achse der Feder im Labilgleichgewichtszustand mit der Drehachse des Haltehakens schneidet. Ist der Haltehaken nicht austariert, ist das Federelement so anzuordnen, dass sich im Labilgleichgewichtszustand an dem Haltehaken ein Momenten-Gleichgewicht um die Drehachse ergibt.

Alternativ ist es möglich, wenn das Rückstellelement eine an dem Haltehaken vorgesehene Rückstellmasse ist. Indem die Rückstellmasse an dem Haltehaken angeordnet ist und somit zusammen mit dieser verschwenkt wird, kann die Verschiebung des Schwerpunktes des Haltehakens bei deren Verschwenkung derart beeinflusst werden, dass die gewünschte Funktionsweise des Rückstellelementes erreicht wird. Im Labilgleichgewichtszustand der Haltevorrichtung befindet sich der gemeinsame Schwerpunkt des Haltehakens und der Rückstellmasse dann auf einer vertikalen Linie mit der Drehachse des Haltehakens.

Es ist auch möglich, dass die Rückstellmasse einstückig mit dem Haltehaken und insbesondere einstückig mit dem Trag- und/oder Auslösearm ausgebildet ist. In anderen Worten kann bereits die Formgebung des Haltehakens derart gewählt sein, dass die für die gewünschte Funktionsweise erforderliche Schwerpunktverschiebung beim Verschwenken erreicht wird.

Alternativ ist es weiterhin möglich, dass das Rückstellelement zwei Magnetelemente umfasst, wobei das eine Magnetelement am Haltehaken und das andere Magnetelement stationär angeordnet ist und die Magnetelemente derart zueinander ausgerichtet sind, dass sie sich gegenseitig abstoßen. "Stationär" in diesem Zusammenhang bedeutet, dass das andere Magnetelement ortsfest gegenüber der Drehachse des Haltehakens ist. Da sich die Magnetelemente gegenseitig abstoßen sollen, lässt sich ohne weiteres eine Anordnung der Magnetelemente finden, mit der die gewünschte Funktionsweise des Rückstellelementes erreicht wird. Bei einem gegenüber der Drehachse austarierten Haltehaken können die Magnetelemente bspw. derart angeordnet sein, dass sie im Labilgleichgewichtszustand auf einer zur Drehachse parallelen gemeinsamen Achse liegen. Ist die Haltevorrichtung nicht austariert, ist die Position der Magnetelemente entsprechend anzupassen, um den gewünschten Labilgleichgewichtszustand in der Labilgleichgewichtsposition zu erreichen.

Der Haltehaken kann vorzugsweise als V-förmiger Doppelhebel ausgebildet sein, wobei der eine Schenkel des Doppelhebels der Tragarm, der andere Schenkel des Doppelhebels der Auslösearm sein kann. Die beiden Schenkel können vorzugsweise die gleiche Länge aufweisen. Die Drehachse des Haltehakens ist vorzugsweise zwischen Tragarm und Auslösearm angeordnet. Durch entsprechende Gestaltungsmerkmale - einzeln oder in Kombination - ist eine kostengünstige Herstellung des Haltehakens möglich.

Es ist bevorzugt, wenn die Auslöseebene parallel zur Drehachse des Haltehakens ist.

Das erfindungsgemäße Lagersystem umfasst wenigstens einen vertikalen Schacht mit einer unteren Öffnung, in deren Bereich wenigstens eine erfindungsgemäße Haltevorrichtung vorgesehen ist. Zur Erläuterung der Funktionsweise wird auf die vorstehenden Ausführungen verwiesen. Ist mehr als ein vertikaler Schacht vorgesehen, so sind die einzelnen Schächte vorzugsweise in Längs- und Querrichtung des Lagers nebeneinander angeordnet.

Der Schacht des erfindungsgemäßen Lagersystems kann dabei eine Höhe aufweisen, die geeignet ist, die maximal vorgesehene Höhe eines Behälterstapels vollständig aufzunehmen. Es ist aber auch möglich, dass der Schacht eine obere Öffnung aufweist, aus der der Behälterstapel herausragen kann. Sofern der Behälterstapel in sich ausreichend stabil ist oder ihm durch andere Elemente Stabilität verliehen wird, ist es bei Vorhandensein einer oberen Öffnung auch möglich, dass der Schacht eine Höhe entsprechend einiger weniger gestapelter Behälter oder sogar weniger als die Höhe eines einzelnen Behälters aufweist. Eine (durchgehende) Bewandung zur Begrenzung des Schachts ist nicht erforderlich.

Es ist bevorzugt, wenn im Bereich der unteren Öffnung an zwei gegenüberliegenden Seiten des Schachtes jeweils eine, vorzugsweise wenigstens zwei erfindungsgemäße Haltevorrichtungen vorgesehen sind.

Es ist weiter bevorzugt, wenn der Abstand zwischen zwei gegenüberliegenden Haltevorrichtungen derart gewählt ist, dass bei Einlagerung eines Behälters von unten die Tragarme der Haltehaken der Haltevorrichtungen durch den einzulagernden Behälter nur im Bereich zwischen ihren jeweiligen Halte- und Labilgleichgewichtspositionen verschwenkt werden. Durch eine entsprechende Wahl des Abstandes kann sichergestellt werden, dass allein durch den Kontakt der Tragarme mit einem einzulagernden Behälter ein Verschwenken der Tragarme bis zur Entnahmeposition hin stattfindet.

Das Lagersystem umfasst vorzugsweise ein Lagerbediengerät zur Einlagerung und Entnahme von Behältern von unten, welches bei der Entnahme des untersten Behälters eines Behälterstapels derart seitlich über den zu entnehmenden Behälter hervorsteht, dass beim Anheben des Behälterstapels durch das Lagerbediengerät die Tragarme der Haltehaken der Haltevorrichtungen durch den seitlichen Überstand in die jeweiligen Bereiche zwischen Labilgleichgewichtsposition und Entnahmeposition verschwenkbar sind. Durch ein entsprechendes Lagerbediengerät wird der oben als Beispiel beschriebene Entnahmevorgang ermöglicht.

Die Erfindung wird nun beispielhaft anhand von bevorzugten Ausführungsformen unter Bezugnahme auf die beigefügten Zeichnungen beschrieben. Es zeigen:
- Figur 1:: eine Seitenansicht eines ersten Ausführungsbeispiels eines erfindungsgemäßen Lagersystems umfassend ein erstes Ausführungsbeispiel erfindungsgemäßer Haltevorrichtungen;
- Figur 2a-c:: eine schematische Darstellung eines Einlagerungsvorgangs eines Behälters in das Lagersystem gemäß Figur 1;
- Figur 3a,b:: Detaildarstellungen der Haltevorrichtung aus Figuren 1 und 2;
- Figur 4a-f:: eine schematische Darstellung eines Entnahmevorgangs eines Behälters aus dem Lagersystem gemäß Figur 1;
- Figur 5a,b:: Detaildarstellungen eines zweiten Ausführungsbeispiels einer erfindungsgemäßen Haltevorrichtung; und
- Figur 6a,b:: Detaildarstellungen eines zweiten Ausführungsbeispiels einer erfindungsgemäßen Haltevorrichtung.

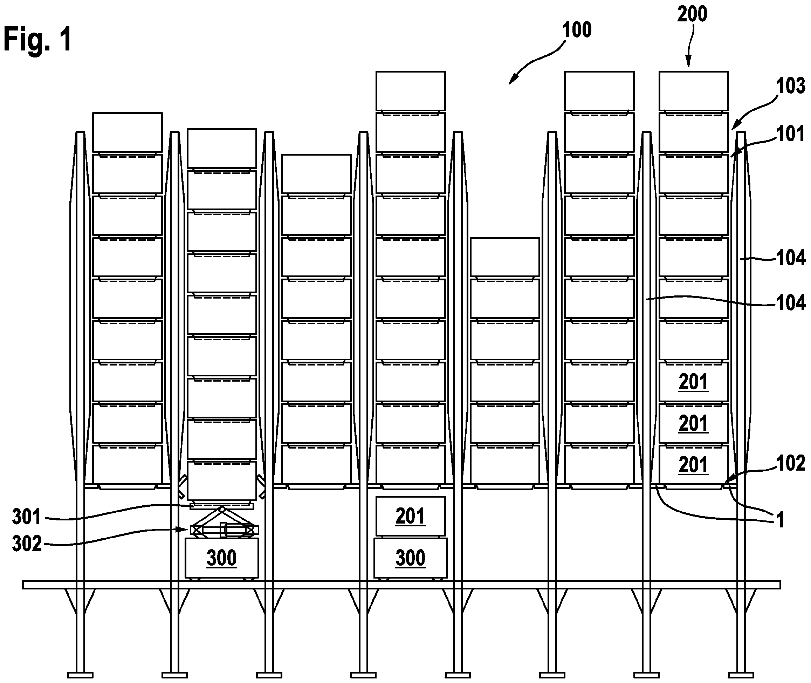

In Figur 1 ist ein erfindungsgemäßes Lagersystem 100 in einer Seitenansicht dargestellt. Das Lagersystem 100 umfasst eine Vielzahl von vertikalen Schächten 101 zur Aufnahme jeweils eines Behälterstapels 200 mit mehreren Behältern 201, wobei neben den in Figur 1 sichtbaren, in Längsrichtung nebeneinander aufgereihten Schächten 101 zusätzliche Schächte in Querrichtung senkrecht zur Blattebene vorgesehen sind. In der Draufsicht bilden die Schächte 101 also eine Rechteckanordnung.

Jeder Schacht 101 weist eine untere Öffnung 102 auf, in deren Bereich Haltevorrichtungen 1 zum Halten des im Schacht 101 befindlichen Behälterstapels 200 vorgesehen sind. Der unterste Behälter 201 des Behälterstapels 200 liegt dabei auf den Haltevorrichtungen 1 auf.

Die untere Öffnung 102 bzw. die dort vorgesehenen Haltevorrichtungen 1 sind in einer Höhe angeordnet, sodass unterhalb der in den Schächten 101 befindlichen Behälterstapel 200 Lagerbediengeräte 300 - auch wenn mit einem Behälter 201 beladen - in Richtung der Blattebene aber auch senkrecht dazu verfahren werden können.

Die Haltevorrichtungen 1 an der unteren Öffnung 102 sind an jeweils gegenüberliegenden Seiten des Schachts 101 angeordnet, wobei auf jeder Seite des Schachts 101 jeweils zwei, senkrecht zur Blattebene beabstandete Haltevorrichtungen 1 vorgesehen sind. Im Bereich der unteren Öffnung 102 eines jeden Schachts 100 sind also vier Haltevorrichtungen 1 vorgesehen. Die Haltevorrichtungen 1 werden in Zusammenhang mit den nachfolgenden Figuren noch ausführlich erläutert.

Jeder Schacht 101 weist weiterhin eine obere Öffnung 103 auf, sodass ein aufgenommener Behälterstapel 200 nach oben aus dem Schacht 101 herausragen kann, wenn dessen Höhe die Höhe des Schachts 101 übersteigt. Jeder Schacht 101 wird durch Elemente 104 seitlich begrenzt.

Die Lagerbediengeräte 300 sind - wie angesprochen - in Richtung der Blattebene aber auch senkrecht dazu verfahrbar. Darüber hinaus weisen sie eine Behälteraufnahme 301 auf, die über einen Hubmechanismus 302 in vertikaler Richtung verfahren werden kann.

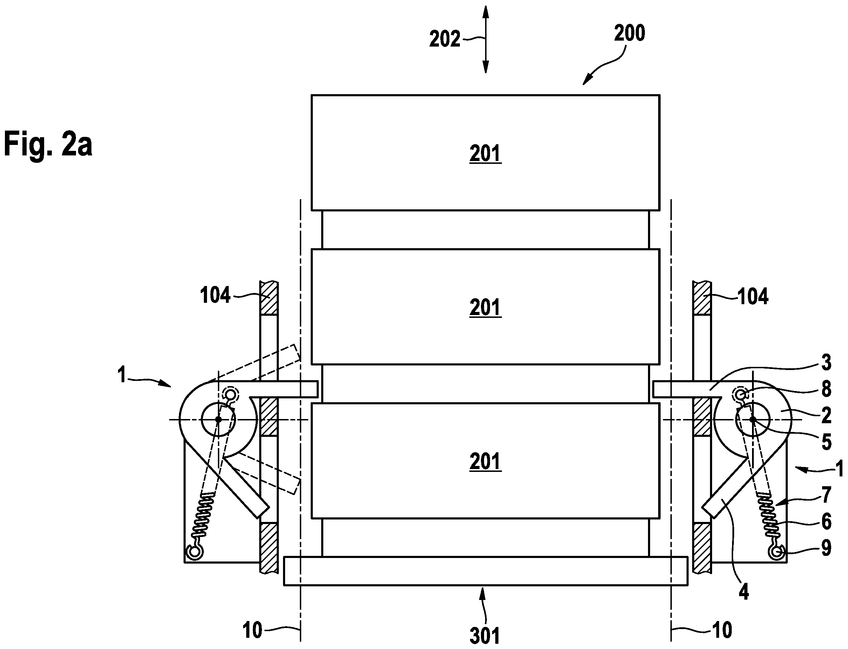

Figur 2a ist ein schematischer Schnitt durch den unteren Bereich eines Schachts 101 des Lagersystems 100 aus Figur 1. Die den Schacht 101 begrenzenden Elemente 104 sind nur teilweise dargestellt. Gleiches gilt für den Behälterstapel 200 mit dem auf den Haltevorrichtungen 1 aufliegenden untersten Behälter 201.

Die Haltevorrichtungen 1 umfassen jeweils einen Haltehaken 2 mit einem Tragarm 3 und einem Auslösearm 4, wobei der Haltehaken 2 als V-förmiger Doppelhebel mit zwei gleichlangen Schenkeln ausgebildet ist, bei dem der eine Schenkel den Tragarm 3, der andere Schenkel den Auslösearm 4 bildet. Der Haltehaken 2 ist dabei drehbar um eine Drehachse 5 gelagert, die zwischen Tragarm 3 und Auslösearm 4 angeordnet ist.

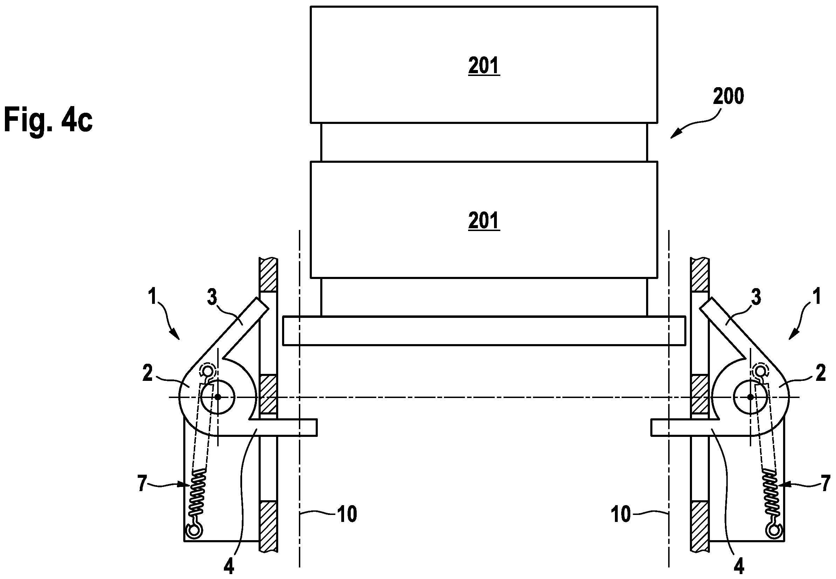

Der Tragarm 3 kann zwischen der in Figur 2a dargestellten Halteposition und der in Figur 4c gezeigten Entnahmeposition verschwenkt werden, wobei zwischen diesen beiden Positionen eine Labilgleichgewichtsposition vorgesehen ist. Die Labilgleichgewichtsposition ist in Figur 2a durch die gestrichelt dargestellte Stellung des Tragarms 3 der einen Haltevorrichtung 1 angedeutet.

Die Haltevorrichtungen 1 umfassen weiterhin jeweils ein als Zugfeder 6 ausgestaltetes Rückstellelement 7. Das eine Federende 8 der Zugfeder 6 ist am Haltehaken 2, das andere Federende 9 an den Schacht 101 seitlich begrenzende Elemente 104 befestigt. Damit ist das andere Federende 9 stationär gegenüber der Drehachse 5 des Haltehakens 2 befestigt.

Die Anbindung des einen Federendes 8 am Haltehaken 2 ist weiterhin so gewählt, dass der Tragarm 3 des Haltehakens 2 bei einer Verschwenkung des Tragarms 3 in einem Bereich zwischen der in Figur 1 gezeigten Halteposition und der angedeuteten Labilgleichgewichtsposition in Richtung der Halteposition gedrängt wird. Bei einer Verschwenkung des Tragarms 3 in einem Bereich zwischen der in Figur 1 angedeuteten Labilgleichgewichtsposition und der in Figur 4c gezeigten Entnahmeposition wird der Tragarm 3 von dem Rückstellelement 7 in Richtung der Entnahmeposition gedrängt.

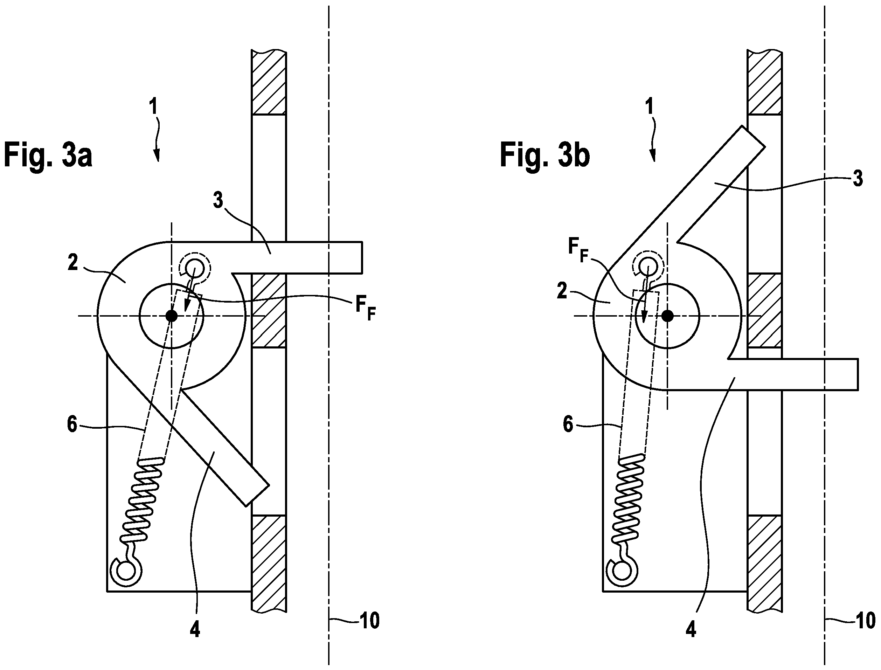

Dieser Umstand wird anhand von Figuren 3a und b verdeutlicht. In Figur 3a ist eine Haltevorrichtung 1 gemäß Figur 2a dargestellt, wobei sich der Tragarm 3 des Haltehakens 2 in Halteposition befindet. Ist diesem Fall wirkt die Federkraft F_{F} der Feder 6 derart, dass der Tragarm 3 in Halteposition gehalten oder bei einer gewissen Verschwenkung in die Halteposition gedrängt wird. Die Federkraft F_{F} bewirkt ein entsprechendes Moment. Im Beispiel gemäß Figur 3a wirkt dieses Moment im Uhrzeigersinn um die Drehachse 5 des Haltehakens 2.

Ähnliches gilt für die in Figur 3b dargestellte Entnahmeposition mit einem, gegenüber der Figur 3a in die entsprechende Position verschwenkten Tragarm 3. In diesem Fall wirkt die Federkraft F_{F} der Feder 6 derart, dass der Tragarm 3 in Entnahmeposition gehalten oder bei einer gewissen Verschwenkung in die Entnahmeposition gedrängt wird. Das durch die Federkraft F_{F} hervorgerufene Moment um die Drehachse 5 des Haltehakens 2 wirkt im Beispiel gemäß Figur 3b entgegen dem Uhrzeigersinn.

Zwischen Halte- und Entnahmeposition ist die Labilgleichgewichtsposition vorgesehen, bei der der Tragarm 3 grundsätzlich zu keine der beiden genannten Positionen gedrängt wird (sich also im Momenten-Gleichgewicht befindet). Jede von der Labilgleichgewichtsposition abweichende Position des Tragarms 3 führt aber unweigerlich dazu, dass der Tragarm 3 eindeutig bestimmbar entweder zur Halteposition oder zur Entnahmeposition gedrängt wird.

Für jede Haltevorrichtung 1 ist eine Auslöseebene 10 definiert. Die Auslöseebene 10 ist dabei parallel zur Höhe des Behälterstapels 200, die durch den Doppelpfeil 202 angedeutet ist. Die Auslöseebene 10 schneidet den Tragarm 3 in der in Figuren 2a und 3a dargestellten Halteposition, während die Auslöseebene 10 vom Auslösearm 4 in dieser Position des Tragarms 3 nicht geschnitten wird. In der Entnahmeposition des Tragarms 3 wird die Auslöseebene 10 von dem Auslösearm 4 jedoch geschnitten, wie aus Figur 3b und 4c ersichtlich ist. In der Labilgleichgewichtsposition schneiden sowohl der Tragarm 3 als auch der Auslösearm 4 die Auslöseebene 10.

Die Funktionsweise der Haltevorrichtung 1 wird nachfolgend anhand beispielhafter Einlagerungs- und Entnahmevorgänge eines Behälters 201 in bzw. aus einen Behälterstapel 200 erläutert. Der Einlagerungsvorgang wird dabei anhand der Figuren 2a-c beschrieben, wobei die Figuren jeweils Zwischenzustände des Einlagerungsvorgangs zeigen.

Zur Einlagerung eines Behälters 201 in den Behälterstapel 200 wird der einzulagernde Behälter 201 von einem Lagerbediengerät 300 (nicht dargestellt) mit der Behälteraufnahme 301 von unten an den ursprünglich untersten Behälter 201 des Behälterstapels 200 herangefahren und dann so angehoben, dass der gesamte Behälterstapel 200 angehoben wird. Zu diesem Zeitpunkt wird der einzulagernde Behälter 201 bereits der neue unterste Behälter 201 des Behälterstapels 200. Dieser Zustand ist in Figur 2a dargestellt.

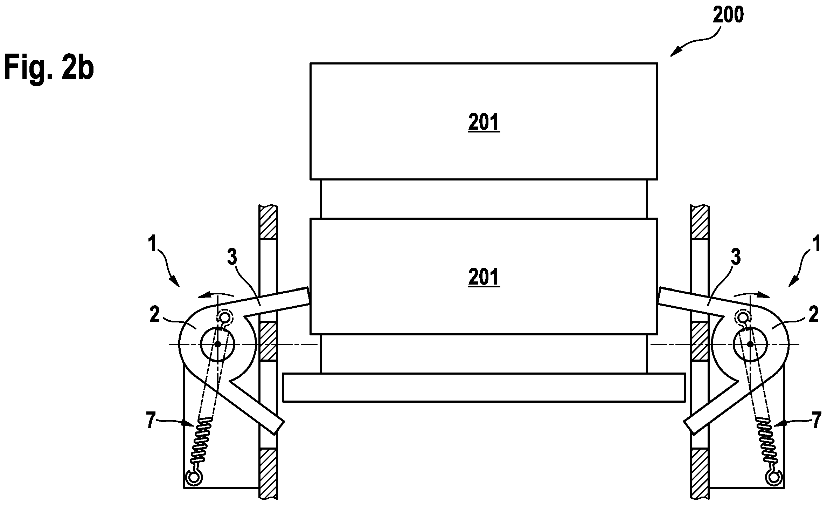

Anschließend wird der gesamte Behälterstapel 200 weiter angehoben, sodass die Tragarme 3 der Haltehaken 2 der Haltevorrichtungen 1 derart nach oben verschwenken, dass sie seitlich an dem einzulagernden bzw. untersten Behälter 201 entlanggleiten, wie in Figur 2b dargestellt. Dabei werden die Tragarme 3 lediglich in eine Position zwischen ihrer jeweiligen Halteposition und Labilgleichgewichtsposition verschwenkt, so dass die Rückstellelemente 7 die Tragarme 3 zurück zur Halteposition hin drängen.

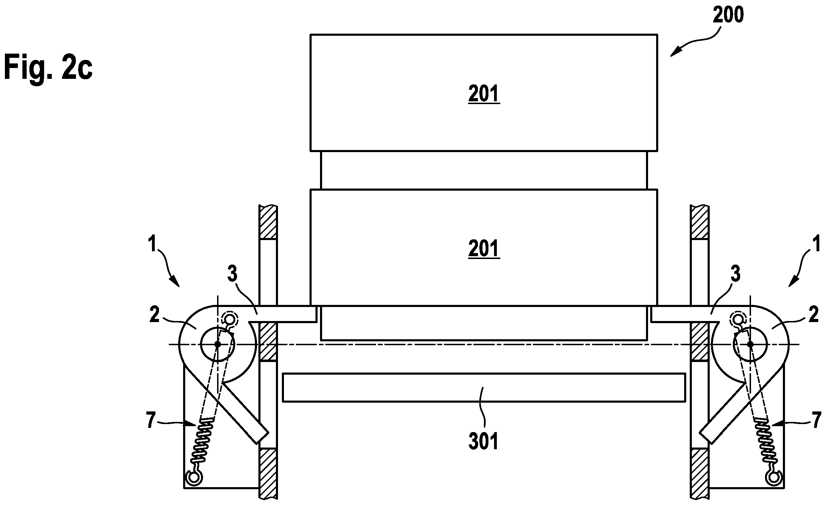

Ist der Behälterstapel 200 ausreichend weit angehoben, können die Tragarme 3 der Haltehaken 2 der einzelnen Haltevorrichtungen 1 unter den einzulagernden bzw. untersten Behälter 201 greifen, wobei sie aufgrund der Rückstellelemente 7 in die Halteposition verschwenkt werden. Wird die Behälteraufnahme 301 des Lagerbediengeräts 300 anschließend wieder nach unten verfahren, senkt sich der Behälterstapel 200 auf die Tragarme 3 der Haltehaken 2 ab und wird dann durch die Haltevorrichtungen 1 gehalten. Nach dem damit abgeschlossenen Einlagerungsvorgang liegt der einzulagernde bzw. unterste Behälter 201 des Behälterstapels 200 auf den Tragarmen 3 der Haltehaken 2 auf und die Behälteraufnahme 301 des Lagerbediengerätes 300 kann weggefahren werden. Dieser Zustand ist in Figur 2c dargestellt.

Der Einlagerungsvorgang ist damit abgeschlossen.

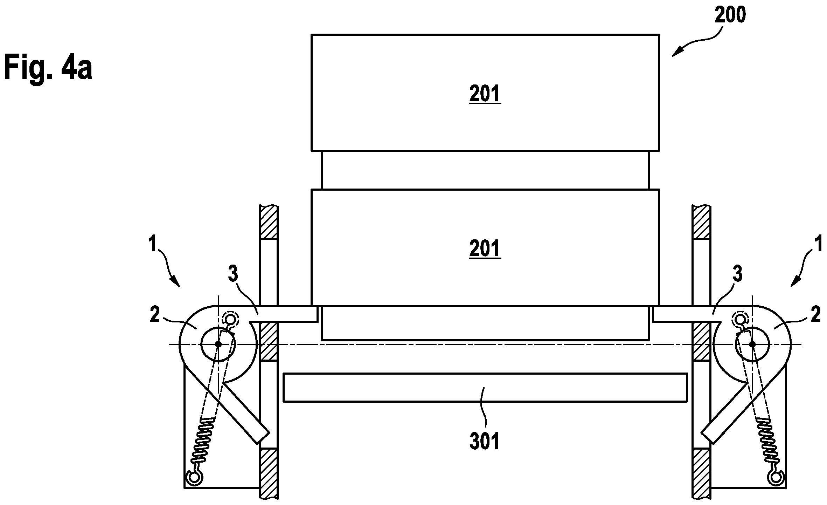

Anhand der Figuren 4a-f wird nun ein Entnahmevorgang eines Behälters 201 aus einen Behälterstapel 200 beschrieben.

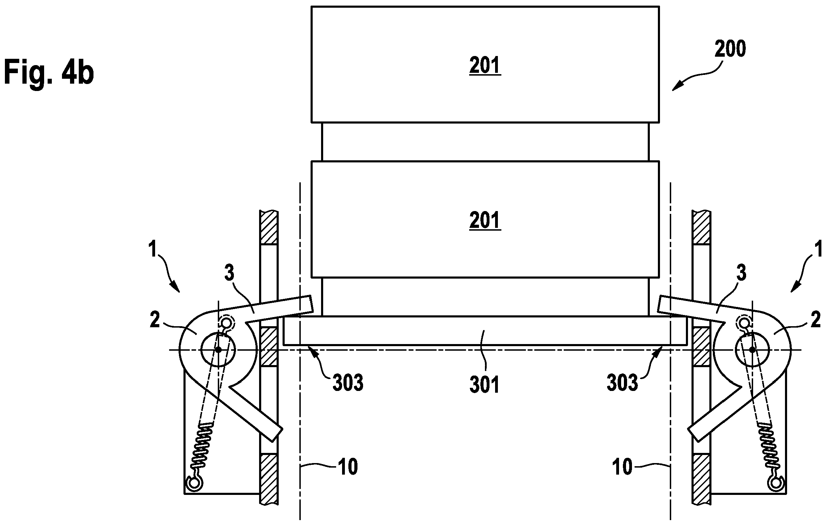

Zur Entnahme des untersten Behälters 201 eines Behälterstapels 200 wird die Behälteraufnahme 301 des Lagerbediengeräts 300 an eben diesen Behälter 201, der auf den Tragarmen 3 der Haltehaken 2 der einzelnen Haltevorrichtungen 1 aufliegt, herangefahren. Dies ist in Figur 4a dargestellt. Anschließend wird der gesamte Behälterstapel 200 durch das Lagerbediengerät 300 angehoben (vgl. Figur 4b). Dabei wird die Behälteraufnahme 301 über die Höhe, die für das Einlagern eines Behälters 201 erforderlich ist (vgl. Figur 2b), hinaus verfahren, wobei die Behälteraufnahme 301 so ausgebildet ist, dass sie seitlich über den zu entnehmenden bzw. untersten Behälter 201 übersteht und in die Auslöseebenen 10 der einzelnen Haltervorrichtungen 1 ragt. Die seitlich überstehenden Bereiche der Behälteraufnahme 301 bilden Auslöser 303 für die Haltevorrichtungen.

Wird die Behälteraufnahme 301 ausreichend hoch verfahren, kommen die Tragarme 3 mit den Auslösern 303 in Kontakt, und werden in den Bereich zwischen Labilgleichgewichtsposition und Entnahmeposition hinein verschwenkt. Daraufhin werden die Rückstellelemente 7 die Tragarme 3 in die Entnahmeposition bewegen, womit die Auslösearme 4 der Haltehaken 2 in die Auslöseebene 10 hineinragen. In der Entnahmeposition behindern die Tragarme 3 die Entnahme des untersten Behälters 201 nach unten nicht mehr. Entsprechendes ist in Figur 4c dargestellt.

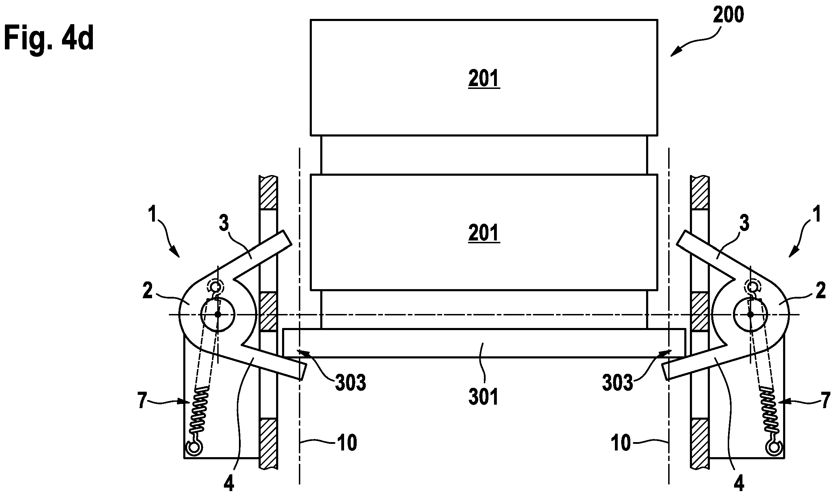

Beim anschließenden Absenken des Behälterstapels 200 durch die Behälteraufnahme 301 des Lagerbediengeräts 300 kommen die Auslösearme 4 mit den Auslösern 303 in Kontakt und werden derart verschwenkt, dass die mit den Auslösearmen 4 drehfest verbundenen Tragarme 3 der Haltehaken 2 in einen Bereich zwischen Labilgleichgewichtsposition und Halteposition verschwenkt werden, womit die Tragarme 3 durch die Rückstellelemente 7 wieder zur Halteposition hin gedrängt werden. Dieser Vorgang ist in Figur 4d angedeutet.

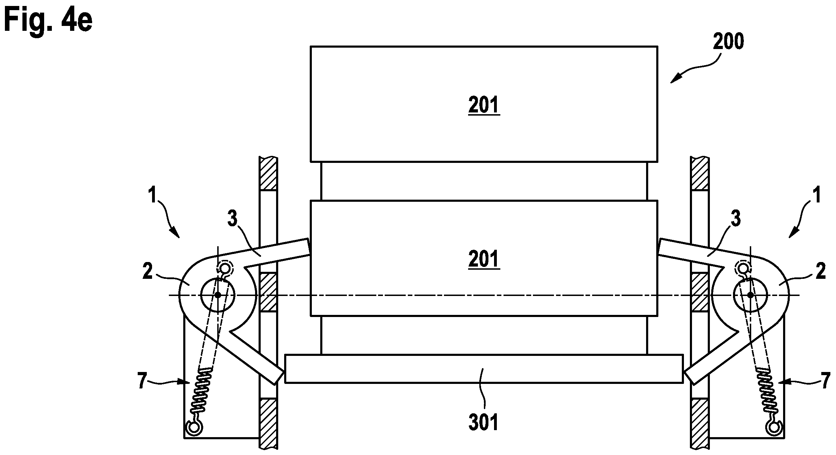

Bei weiterem Absenken der Behälteraufnahme 301 des Lagerbediengeräts 300 gleiten die Tragarme 3 dann zunächst an den Seitenwänden des zu entnehmenden Behälters 201 entlang (vgl. Figur 4e), bevor sie zwischen dem zu entnehmenden Behälter 201 und dem darüber liegenden Behälter 201 eingreifen.

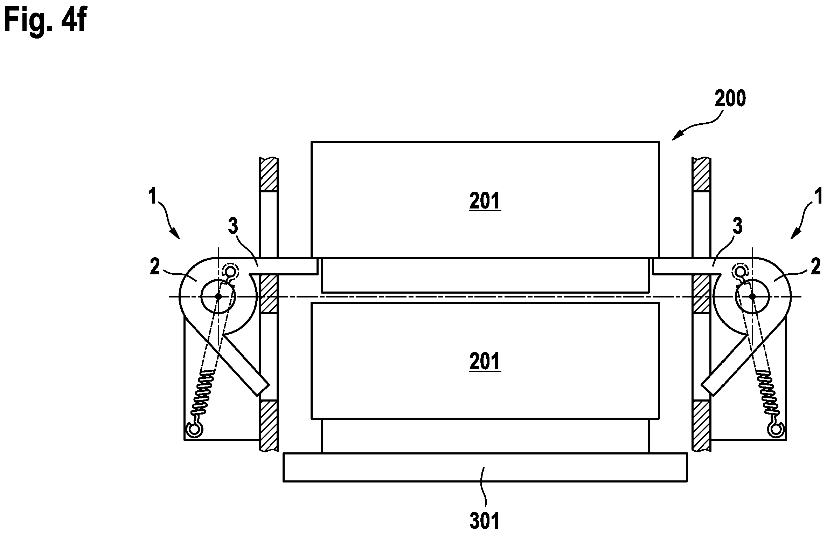

Wird die Behälteraufnahme 301 des Lagerbediengeräts 300 noch weiter abgesenkt, schwenken die Tragarme 3 in die Halteposition, wobei der vormals über dem zu entnehmenden Behälter 201 liegende Behälter direkt auf den Tragarmen 3 der Haltevorrichtungen 1 aufliegt und somit nunmehr den untersten Behälter 201 des Behälterstapels 200 bildet. Der zu entnehmende Behälter 201 liegt auf der Behälteraufnahme 301 des Lagerbediengeräts 300 auf und kann weiter transportiert werden. Dies ist in Figur 4f dargestellt.

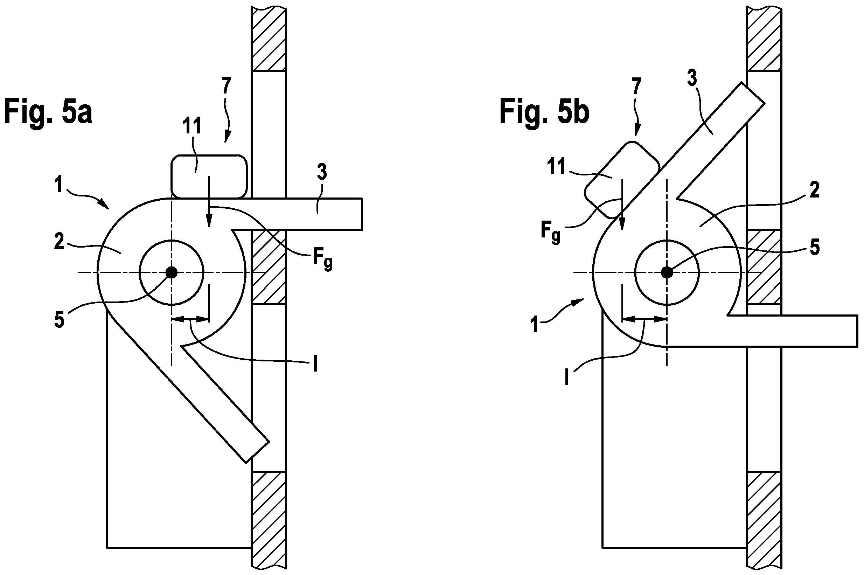

In Figuren 5a und b ist ein zweites Ausführungsbeispiel einer erfindungsgemäßen Haltevorrichtung 1 dargestellt. Die Haltevorrichtung 1 gemäß Figuren 5a, b unterscheidet sich dabei lediglich in dem Rückstellelement 7 von der Haltevorrichtung aus den vorangegangenen Figuren. Es wird daher auf die vorstehenden Ausführungen - auch hinsichtlich der Funktionsweise der Haltevorrichtung 1 - verwiesen und im Folgenden lediglich auf die Unterschiede zwischen den Haltevorrichtungen 1 aus Figuren 5a, b und den vorangegangenen Figuren eingegangen.

Die Haltevorrichtung 1 gemäß Figuren 5a, b weist als Rückstellelement 7 eine Rückstellmasse 11 auf, die derart am Haltehaken 2 angeordnet ist, dass sie bei einer Verschwenkung zwischen der in Figur 5a dargestellten Halteposition und der Labilgleichgewichtsposition den Tragarm 3 in der Halteposition hält oder ihn zu dieser Position hin drängt. Durch die entsprechende Anordnung der Rückstellmasse 11 am Haltehaken 2 kann ein hierfür geeignetes Moment um die Drehachse 5 des Haltehakens erzeugt werden, im dargestellten Beispiel ein Moment im Uhrzeigersinn.

Bei einer Verschwenkung des Tragarms 3 zwischen Labilgleichgewichtsposition und Entnahmeposition (vgl. Figur 5b) wirkt das durch die Rückstellmasse 11 gegenüber der Drehachse 5 des Haltehakens 2 derart, dass der Tragarm 3 in der Entnahmeposition gehalten oder zur Entnahmeposition hin gedrängt wird. Im dargestellten Ausführungsbeispiel wirkt dieses Moment gegen den Uhrzeigersinn.

Die Rückstellmasse 11 kann - anders als in Figur 5a, b dargestellt - auch einstückig mit dem Haltehaken 2 ausgebildet sind.

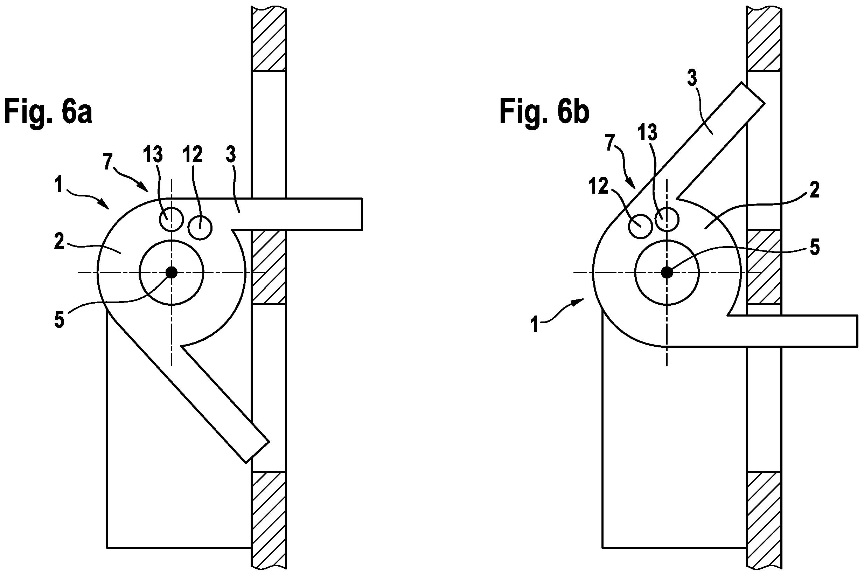

In Figuren 6a und b ist ein drittes Ausführungsbeispiel einer erfindungsgemäßen Haltevorrichtung 1 dargestellt. Die Haltevorrichtung 1 gemäß Figuren 6a, b unterscheidet sich dabei lediglich in dem Rückstellelement 7 von der Haltevorrichtung aus den Figuren 2 und 4. Es wird daher auf die vorstehenden Ausführungen - auch hinsichtlich der Funktionsweise der Haltevorrichtung 1 - verwiesen und im Folgenden lediglich auf die Unterschiede zwischen den Haltevorrichtungen 1 aus Figuren 6a, b und den Figuren 2 und 4 eingegangen.

Die Haltevorrichtung 1 gemäß Figuren 6a, b weist als Rückstellelement 7 zwei Magnetelemente 12, 13 auf, wobei das eine Magnetelement 12 am Haltehaken 2 und das andere Magnetelement 13 stationär, d.h. ortsfest gegenüber der Drehachse 5 des Haltehakens 2, angeordnet ist. Die Magnetelemente 12, 13 sind dabei derart zueinander ausgerichtet, dass sie sich gegenseitig abstoßen.

Die Magnetelemente 12, 13 sind so angeordnet, dass aufgrund der Abstoßung bei einer Verschwenkung des Tragarms 3 des Haltehakens 2 zwischen der in Figur 6a dargestellten Halteposition und der Labilgleichgewichtsposition der Tragarm 3 zur Halteposition hin gedrängt wird. Bei einer Verschwenkung zwischen Labilgleichgewichtsposition und der in Figur 6b dargestellten Entnahmeposition des Tragarms 3 wirkt die Abstoßung zwischen den beiden Magnetelementen 12, 13 derart, dass der Tragarm 3 in Richtung der Entnahmeposition gedrängt wird.

## Patentansprüche

1. Haltevorrichtung (1) für einen Behälterstapel (200) mit Einlagerung und Entnahme von unten, mit einem Haltehaken (2) umfassend einen Tragarm (3), der um eine Drehachse (5) zwischen einer Halteposition zum Halten eines Behälterstapels (200) und einer Entnahmeposition zur Entnahme eines Behälters (201) des Behälterstapels (200) verschwenkbar ist, **dadurch gekennzeichnet, dass** die Haltevorrichtung einen Auslösearm (4) aufweist, der drehfest gegenüber dem Tragarm (3) ist, wobei zwischen der Halteposition und der Entnahmeposition eine Labilgleichgewichtsposition vorgesehen ist und die Haltevorrichtung (1) ein Rückstellelement (7) umfasst, wobei das Rückstellelement (7) bei einer Verschwenkung des Tragarms (3) im Bereich zwischen der Halteposition und der Labilgleichgewichtsposition zum Drängen des Tragarms (3) zur Halteposition hin und bei einer Verschwenkung des Tragarms im Bereich zwischen Labilgleichgewichtsposition und Entnahmeposition zum Drängen des Tragarms (3) zur Entnahmeposition hin ausgebildet ist, und wobei der Auslösearm (4) derart ausgebildet ist, dass er in der Entnahmeposition und der Labilgleichgewichtsposition des Tragarms (3) eine Auslöseebene (10) schneidet, die parallel zur Höhe (202) des zu haltenden Behälterstapels (200), den Tragarm (3) in Halteposition und Labilgleichgewichtsposition schneidend und den Auslösearm (4) in der Halteposition des Tragarms (3) nicht-schneidend ist.

2. Haltevorrichtung nach Anspruch 1,
**dadurch gekennzeichnet, dass**
das Rückstellelement (7) eine Feder (6), vorzugsweise eine Zugfeder, mit zwei Federenden (8, 9) ist, wobei das eine Federende (8) am Haltehaken (2), das andere Federende (9) stationär befestigt ist.

3. Haltevorrichtung nach Anspruch 1,
**dadurch gekennzeichnet, dass**
das Rückstellelement (7) eine an dem Haltehaken (2) vorgesehene Rückstellmasse (11) ist, wobei die Rückstellmasse (11) vorzugsweise einstückig mit dem Haltehaken (2) ausgebildet ist.

4. Haltevorrichtung nach Anspruch 1,
**dadurch gekennzeichnet, dass**
das Rückstellelement (7) zwei Magnetelemente (12, 13) umfasst, wobei das eine Magnetelement (12) am Haltehaken (2) und das andere Magnetelement (13) stationär angeordnet ist und die Magnetelemente (12, 13) derart zueinander ausgerichtet sind, dass sie sich gegenseitig abstoßen.

5. Haltevorrichtung nach einem der vorhergehenden Ansprüche,
**dadurch gekennzeichnet, dass**
der Haltehaken (2) als V-förmiger Doppelhebel ausgebildet ist, wobei der eine Schenkel des Doppelhebels der Tragarm (3), der andere Schenkel des Doppelhebels der Auslösearm (4) ist.

6. Haltevorrichtung nach einem der vorhergehenden Ansprüche,
**dadurch gekennzeichnet, dass**
die Drehachse (5) des Haltehakens (2) zwischen Tragarm (3) und Auslösearm (4) angeordnet ist.

7. Haltevorrichtung nach einem der vorhergehenden Ansprüche,
**dadurch gekennzeichnet, dass**
die Auslöseebene (10) parallel zur Drehachse (5) des Haltehakens (2) ist.

8. Lagersystem (100) für Behälterstapel (200) mit Einlagerung und Entnahme von unten, umfassend wenigstens einen vertikalen Schacht (101) zur wenigstens teilweisen Aufnahme eines Behälterstapels (200) mit einer unteren Öffnung (102) zur Einlagerung und Entnahme von Behältern (201), wobei im Bereich der unteren Öffnung (102) des wenigstens einen Schachts (101) wenigstens eine Haltevorrichtung (1) zum Halten eines Behälterstapels (200) im Schacht (101) vorgesehen ist, **dadurch gekennzeichnet, dass**
wenigstens eine der Haltevorrichtungen (1) gemäß einem der Ansprüche 1 bis 7 ausgebildet ist.

9. Lagersystem nach Anspruch 8,
**dadurch gekennzeichnet, dass**
im Bereich der unteren Öffnung (102) an zwei gegenüberliegenden Seiten des Schachtes (101) jeweils eine, vorzugsweise wenigstens zwei Haltevorrichtungen (1) gemäß einem der Ansprüche 1 bis 7 vorgesehen sind.

10. Lagersystem nach Anspruch 8 oder 9,
**dadurch gekennzeichnet, dass**
der Abstand zwischen zwei gegenüberliegenden Haltevorrichtungen (1) derart gewählt ist, dass bei Einlagerung eines Behälters (200) von unten die Tragarme (3) der Haltehaken (2) der Haltevorrichtungen (1) durch den einzulagernden Behälter (201) nur im Bereich zwischen ihren jeweiligen Halte- und Labilgleichgewichtspositionen verschwenkt werden.

11. Lagersystem nach einem der Ansprüche 8 bis 10,
**dadurch gekennzeichnet, dass**
das Lagersystem (100) ein Lagerbediengerät (300) zur Einlagerung und Entnahme von Behältern (201) von unten umfasst, welches bei der Entnahme des untersten Behälters (201) eines Behälterstapels (200) derart seitlich über den zu entnehmenden Behälter (201) hervorsteht, dass beim Anheben des Behälterstapels (200) durch das Lagerbediengerät (300) die Tragarme (3) der Haltehaken (2) der Haltevorrichtungen (1) durch den seitlichen Überstand in die jeweiligen Bereiche zwischen Labilgleichgewichtsposition und Entnahmeposition verschwenkbar sind.

## Claims

1. A holding device (1) for a container stack (200), with stocking and retrieving from below, having a holding hook (2) comprising a support arm (3) which is pivotable about a rotation axis (5) between a holding position for holding a container stack (200) and a retrieving position for retrieving a container (201) of the container stack (200), **characterized in that** the holding device has a release arm (4) which is rotationally fixed in relation to the support arm (3), wherein a position of unstable equilibrium is provided between the holding position and the retrieving position, and the holding device (1) comprises a restoring element (7), wherein the restoring element (7) in the case of the support arm (3) pivoting in the region between the holding position and the position of unstable equilibrium is configured for urging the support arm (3) toward the holding position, and in the case of the support arm pivoting in the region between the position of unstable equilibrium and the retrieving position is configured for urging the support arm (3) toward the retrieving position, and wherein the release arm (4) is configured in such a manner that the former in the retrieving position and in the position of unstable equilibrium of the support arm (3) intersects a releasing plane (10) which is parallel with the height (202) of the container stack (200) to be held, intersects the support arm (3) in the holding position and in the position of unstable equilibrium, and does not intersect the release arm (4) in the holding position of the support arm (3).

2. The holding device as claimed in claim 1, **characterized in that** the restoring element (7) is a spring (6), preferably a tension spring, having two spring ends (8, 9), wherein the one spring end (8) is fastened to the holding hook (2), the other spring end (9) being fastened in a stationary manner.

3. The holding device as claimed in claim 1, **characterized in that** the restoring element (7) is a restoring mass (11) that is provided on the holding hook (2), wherein the restoring mass (11) is preferably configured so as to be integral to the holding hook (2).

4. The holding device as claimed in claim 1, **characterized in that** the restoring element (7) comprises two magnetic elements (12, 13), wherein the one magnetic element (12) is disposed on the holding hook (2), and the other magnetic element (13) is disposed so as to be stationary, the magnetic elements (12, 13) being mutually aligned in such a manner that they are mutually repellent.

5. The holding device as claimed in one of the preceding claims, **characterized in that** the holding hook (2) is configured as a V-shaped double lever, wherein the one leg of the double lever is the support arm (3), the other leg of the double lever being the release arm (4).

6. The holding device as claimed in one of the preceding claims, **characterized in that** the rotation axis (5) of the holding hook (2) is disposed between support arm (3) and release arm (4).

7. The holding device as claimed in one of the preceding claims, **characterized in that** the releasing plane (10) is parallel with the rotation axis (5) of the holding hook (2).

8. A storage system (100) for container stacks (200) with stocking and retrieving from below, comprising at least one vertical shaft (101) for at least partially receiving a container stack (200), having a lower opening (102) for stocking and retrieving containers (201), wherein at least one holding device (1) for holding a container stack (200) in the shaft (101) is provided in the region of the lower opening (102) of the at least one shaft (101), **characterized in that** at least one of the holding devices (1) is configured according to one of claims 1 to 7.

9. The storage system as claimed in claim 8, **characterized in that** one holding device (1), preferably at least two holding devices (1), according to one of claims 1 to 7 is/are provided in the region of the lower opening (102) on each of two opposite sides of the shaft (101).

10. The storage system as claimed in claim 8 or 9, **characterized in that** the spacing between two opposite holding devices (1) is chosen in such a manner that, when stocking a container (200) from below, the support arms (3) of the holding hooks (2) of the holding devices (1) are pivoted by the container (201) to be stocked only in the region between the respective holding positions and positions of unstable equilibrium thereof.

11. The storage system as claimed in one of claims 8 to 10, **characterized in that** the storage system (100) comprises a storage operation apparatus (300) for stocking and retrieving containers (201) from below, which storage operation apparatus (300) when retrieving the lowermost container (201) of a container stack (200) laterally projects beyond the container (201) to be retrieved in such a manner that the support arms (3) of the holding hooks (2) of the holding devices (1), when lifting the container stack (200) by way of the storage operation apparatus (300), by way of the lateral projection are pivotable to the respective regions between the position of unstable equilibrium and the retrieving position.

## Revendications

1. Dispositif de retenue (1) pour un empilement de récipients (200) comprenant une insertion et un prélèvement par le dessous, avec un crochet de retenue (2) comprenant un bras de support (3) qui peut être pivoté autour d'un axe de rotation (5) entre une position de retenue pour retenir un empilement de récipients (200) et une position de prélèvement pour prélever un récipient (201) de l'empilement de récipients (200), **caractérisé en ce que** le dispositif de retenue présente un bras de déclenchement (4) qui est solidaire en rotation par rapport au bras de support (3), et une position d'équilibre instable étant prévue entre la position de retenue et la position de prélèvement et le dispositif de retenue (1) comprenant un élément de rappel (7), l'élément de rappel (7), lors d'un pivotement du bras de support (3) dans la région entre la position de retenue et la position d'équilibre instable étant réalisé pour pousser le bras de support (3) dans la position de retenue et lors d'un pivotement du bras de support dans la région entre la position d'équilibre instable et la position de prélèvement, étant réalisé pour pousser le bras de support (3) dans la position de prélèvement, et le bras de déclenchement (4) étant réalisé de telle sorte que dans la position de prélèvement et dans la position d'équilibre instable du bras de support (3), il coupe un plan de déclenchement (10) qui, parallèlement à la hauteur (202) de l'empilement de récipients à retenir (200), intersecte le bras de support (3) dans la position de retenue et dans la position d'équilibre instable et n'intersecte pas le bras de déclenchement (4) dans la position de retenue du bras de support (3).

2. Dispositif de retenue selon la revendication 1,
**caractérisé en ce que**
l'élément de rappel (7) est un ressort (6), de préférence un ressort de traction avec deux extrémités de ressort (8, 9), l'une des extrémités de ressort (8) étant fixée au crochet de retenue (2) et l'autre extrémité de ressort (9) étant fixée de manière stationnaire.

3. Dispositif de retenue selon la revendication 1,
**caractérisé en ce que**
l'élément de rappel (7) est une masse de rappel (11) prévue sur le crochet de retenue (2), la masse de rappel (11) étant de préférence réalisée d'une seule pièce avec le crochet de retenue (2).

4. Dispositif de retenue selon la revendication 1,
**caractérisé en ce que**
l'élément de rappel (7) comprend deux éléments magnétiques (12, 13), l'un des éléments magnétiques (12) étant disposé sur le crochet de retenue (2) et l'autre élément magnétique (13) étant disposé de manière stationnaire, et les éléments magnétiques (12, 13) étant orientés l'un par rapport à l'autre de manière à être en aboutissement en sens opposé l'un contre l'autre.

5. Dispositif de retenue selon l'une quelconque des revendications précédentes,
**caractérisé en ce que**
le crochet de retenue (2) est réalisé sous forme de double levier en forme de V, l'une des branches du double levier étant le bras de support (3), l'autre branche du double levier étant le bras de déclenchement (4).

6. Dispositif de retenue selon l'une quelconque des revendications précédentes,
**caractérisé en ce que**
l'axe de rotation (5) du crochet de retenue (2) est disposé entre le bras de support (3) et le bras de déclenchement (4).

7. Dispositif de retenue selon l'une quelconque des revendications précédentes,
**caractérisé en ce que**
le plan de déclenchement (10) est parallèle à l'axe de rotation (5) du crochet de retenue (2).

8. Système de stockage (100) pour un empilement de récipients (200) comprenant une insertion et un prélèvement par le dessous, comprenant au moins un puits vertical (101) pour recevoir au moins en partie un empilement de récipients (200) avec une ouverture inférieure (102) pour l'insertion et le prélèvement de récipients (201), au moins un dispositif de retenue (1) étant prévu dans la région de l'ouverture inférieure (102) de l'au moins un puits (101) pour retenir un empilement de récipients (200) dans le puits (101),
**caractérisé en ce**
**qu'**au moins l'un des dispositifs de retenue (1) est réalisé selon l'une quelconque des revendications 1 à 7.

9. Système de stockage selon la revendication 8,
**caractérisé en ce que**
dans la région de l'ouverture inférieure (102) sont prévus, au niveau de deux côtés opposés du puits (101) à chaque fois un, de préférence au moins deux, dispositifs de retenue (1) selon l'une quelconque des revendications 1 à 7.

10. Système de stockage selon la revendication 8 ou 9,
**caractérisé en ce que**
la distance entre deux dispositifs de retenue opposés (1) est choisie de telle sorte que lors de l'insertion d'un récipient (200) par le dessous, les bras de support (3) des crochets de retenue (2) des dispositifs de retenue (1) soit pivotés par le récipient (201) à insérer uniquement dans la région entre leur position respective de retenue et d'équilibre instable.

11. Système de stockage selon l'une quelconque des revendications 8 à 10,
**caractérisé en ce que**
le système de stockage (100) comprend un appareil de commande de stockage (300) pour l'insertion et le prélèvement de récipients (201) depuis le dessous, lequel, lors du prélèvement du récipient le plus bas (201) d'un empilement de récipients (200), fait saillie latéralement au-delà du récipient à prélever (201), de telle sorte que lors du soulèvement de l'empilement de récipients (200) par l'appareil de commande de stockage (300), les bras de support (3) des crochets de retenue (2) des dispositifs de retenue (1) puissent être pivotés par le dépassement latéral dans les régions respectives entre la position d'équilibre instable et la position de prélèvement.
